# EUROPEAN PATENT APPLICATION

(11) **EP 4 818 764 A1**
(43) Date of publication of application: **07.10.2026**
(21) Application number: 25425015.2
(22) Date of filing: 31.03.2025
(51) Int. Cl.: G02B 1/00, G02B 27/00, G02B 27/01

(54) **HEAD-MOUNTABLE DEVICE WITH EYE-TRACKING SYSTEM**

(71) Applicant: Luxottica S.r.l., 32021 Agordo (BL) (IT)
(72) Inventor: Pelli Cresi, Jacopo Stefano, 20137 Milano (MI) (IT); Bonino, Vittorio, 10126 Torino (TO) (IT); Coviello, Filippo, 20133 Milano (MI) (IT); Cesaratto, Anna, 20125 Milano (MI) (IT); Ongarello, Tommaso, 32021 Agordo (BL) (IT); Baldin, Pietro, 30171 Mestre (VE) (IT); Della Valle, Giuseppe, 25128 Brescia (BS) (IT)
(74) Representative: Biallo, Dario

(57) **Abstract**

Head-mountable device (100) comprising:
- at least one lens (114, 115);
- an eye-tracking system (200) associated to the at least one lens (114, 115), the eye-tracking system (200) comprising:
- at least one photodetector (220) optically coupled to the edge of the at least one lens (114, 115), the at least one photodetector (220) being configured to detect the optical signal reflected by the eye to be tracked and generate a respective electric detection signal;
- a processing and control unit (230) associated to the at least one photodetector (220), the processing and control unit (230) being configured to receive the electric detection signals and to estimate the direction of the gaze of the eye to be tracked on the basis of said received electric detection signals

wherein the at least one lens (114, 115) comprises at least one SLR-based optical metasurface (120) configured to increase the light guiding effect towards the edge of the at least one lens (114, 115) at a predetermined wavelength range.

## Description

The present invention refers to a head-mountable device comprising an eye-tracking system.

Head-mountable devices encompass any type of device designed to be worn over at least one eye of a wearer and configured to be mounted on a head, including any eyewear.

In particular, smart head-mountable devices are known to comprise electronic devices adapted to operate as an electronic calculator capable of supporting the activities carried out by the user wearing them. For example a smart eyewear is a smart head-mountable device. In more details, the electronic devices are capable of playing audio and video, launch and run software applications, recognize shapes and objects placed in the surrounding environment.

More in particular, the electronic devices usually comprise a processing and control unit and sensors integrated into the spectacle frame or temples.

For example, it is known to provide smart head-mountable devices with an eye-tracking system in order to activate/deactivate some functionalities of the smart eyewear, for example for augmented and mixed reality, and/or monitoring the movement of the eye for medical, psychological, commercial and marketing purposes, e.g. for tracking the direction of the gaze towards a shop window or a supermarket shelf.

Several different types of eye-tracking systems are currently known.

An eye-tracking system of a first type, which is the most widely used, comprises one or more sources for illuminating the eye under tracking and one or more cameras for capturing the movement of the eye. Such a system is characterized by high hardware and computing energy consumption that cannot be supported for a satisfactory time by the integrated battery of a known eyewear. In addition, such a system is bulky and therefore cannot be embedded in smart eyewear that must appear identical to the common eyewear.

In view of this drawback an eye-tracking system of a second type is becoming more attractive, which comprise infrared and/or near-infrared wavelengths source that illuminate the eye to be tracked and photodetectors to detect the optical signal reflected by the illuminated eye; in these systems the direction of the gaze is obtained on the basis of the detected optical signal. Since these systems operate at infrared and/or near-infrared wavelengths that are outside the sensitivity range of the human-eye they do not interfere with the sight capacity.

In the present description, for infrared wavelengths it is intended to indicate wavelengths comprised between 700nm and 1mm.

For near-infrared wavelengths it is intended to indicate wavelengths comprised between 700nm and 10µm.

US 10,521,658 B2, US 11,256,086 B2, US10,606,071 B1, US 10,481,687 B1 describe examples of eye-tracking system of the second type.

The eye-tracking system of the second type involves a substantial modification of the appearance of the eyewear since it is necessary to provide wires for connecting the photodetectors and the light sources to the power supply and to realize bulky devices with low or null transparency.

The object of the present invention is to overcome the above-mentioned drawbacks and, in particular, to devise a head-mountable device with an eye-tracking system which is accurate and does not need to modify the usual appearance of the head-mountable device.

This and other objects according to the present invention are achieved by making a head-mountable device with an eye-tracking system as set forth in claim 1.

Further characteristics of the head-mountable device with an eye-tracking system are the objects of the dependent claims.

The characteristics and advantages of the head-mountable device with an eye-tracking system according to the present invention will be more evident from the following exemplary though non-limiting description, referring to the attached schematic drawings in which:

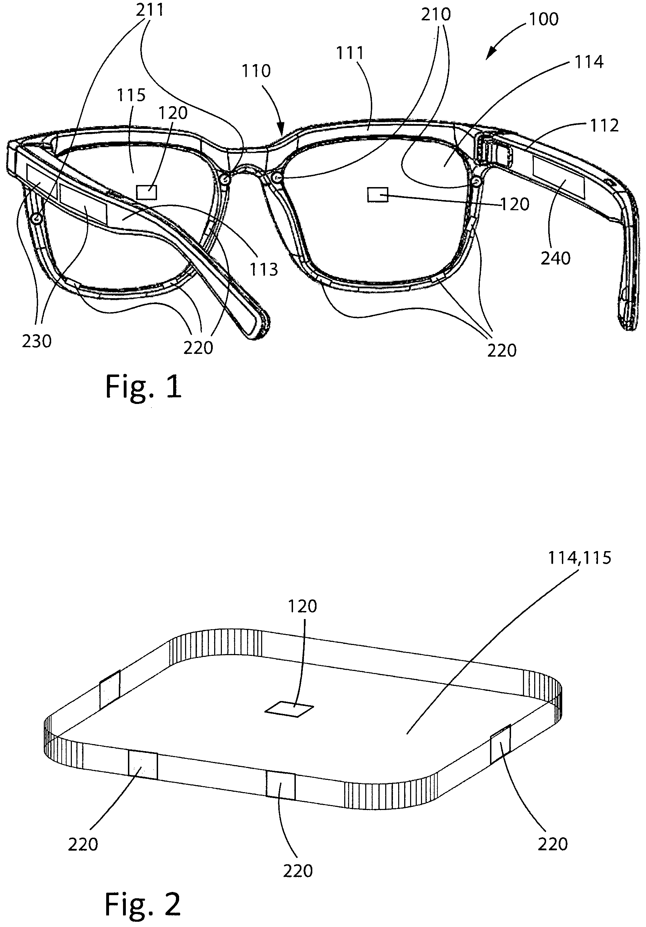

- Figure 1 is a schematic perspective view of a head-mountable device, in particular an eyewear, according to the present invention;
- Figure 2 is a schematic frontal view of a detail of Figure 1;

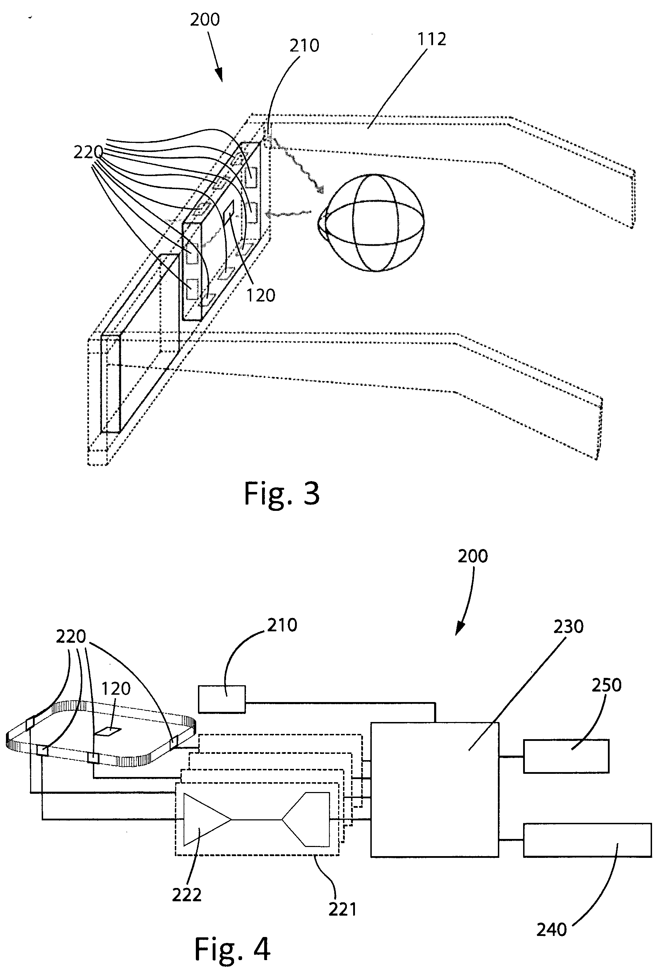

- Figure 3 is a schematic perspective view that illustrates the operation of a head-mountable device, in particular an eyewear, according to the present invention;
- Figure 4 is a block scheme representing the electronic devices included in the head mountable device according to the present invention;
- Figure 5 is a schematic perspective view of a portion of a metasurface comprised in the head-mountable device according to the present invention;
- Figure 6a shows a schematic view of a setup of ray-tracing simulation of an eye-tracking system of a head-mountable device according to the present invention;
- Figure 6b shows a graph representing the Signal Increment at varying scattering efficiency;
- Figure 7 is a schematic view representing the propagation and scattering of an optical signal used in the eye-tracking system 200.

With reference to the figures, a head-mountable device is shown, globally referred to as 100.

Head-mountable devices encompasses any type of device designed to be worn over at least one eye of a wearer and configured to be mounted on a head.

For example, the head-mountable device may be an eyewear, a helmet, or a visor, or a mask and so on.

In particular, in the illustrated figures the head-mountable device 100 is an eyewear.

The head-mountable device 100 comprises at least one lens 114, 115 and an eye-tracking system 200 associated to the at least one lens 114, 115.

In particular, the head-mountable device 100 may comprise a frame 110 to which the at least one lens 114, 115 is coupled.

In the illustrated embodiment, the head-mountable device 100 comprises a frame 110 which comprises a front 111, two temples 112, 113 coupled to the front 111 and at least one lens 114, 115 coupled to the front 111; in this case the eye-tracking system 200 is associated to the frame 110. For example, the head-mountable device is an eyeglass and in this case it can comprise two lenses; the head-mountable device 100 can be also a ski-mask or a mask sunglass and in this case it can comprise a single lens.

The eye-tracking system 200 comprises at least one photodetector 220, preferably three photodetectors 220, optically coupled to the edge of the at least one lens 114, 115.

For optically coupled it is meant that the at least one photodetector 220 is arranged so as to allow the transmission of light from the at least one lens 114, 115 to the at least one photodetector 220.

The at least one photodetector 220 is configured to detect the optical signal reflected by the eye to be tracked at a predetermined wavelength range. Preferably, part of the optical signal reflected by the eye to be tracked derives from an optical radiation emitted by at least one optical source 210, 211 that impinges on the eye to be tracked.

For optical source it is intended a source configured to emit an electromagnetic radiation at the predetermined wavelength range.

The at least one optical source 210, 211 may be external to the eye-tracking system 200 or alternatively it may be comprised in such an eye-tracking system 200.

In the latter case, the at least one optical source 210, 211 is arranged to face and emit an optical signal towards a respective eye to be tracked of a user when such a user wears the head-mountable device 100.

In the illustrated embodiment the at least one optical source 210, 211 is coupled to the frame 110.

Moreover, in the illustrated embodiments, there are two optical sources 210, 211 one for each respective eye. However, the eye to be tracked may be just one of the two eyes of a user and in this case the eye-tracking system 200 preferably comprises just one optical source. In any case, the at least one optical sources 210, 211 must be directed towards the eye to be tracked.

For example the at least one optical sources 210, 211 is a LED.

Preferably, the predetermined wavelength range is the infrared wavelengths range. In this case the at least one optical source 210, 211 is configured for emitting an optical signal at infrared wavelengths and the at least one photodetector 220 is configured for detecting an optical signal at the infrared wavelengths.

More preferably, the predetermined wavelength range is the near-infrared wavelengths range. In this case the at least one optical source 210, 211 is configured for emitting an optical signal at near-infrared wavelengths and the at least one photodetector 220 is configured for detecting an optical signal at the near-infrared wavelengths.

Even more preferably, the at least one optical source 210, 211 is configured for emitting an optical signal at 850 nm. In this case the at least one photodetector 220 is configured for detecting an optical signal at 850 nm. In any case, the at least one photodetector 220 is also configured to generate a respective electric detection signal following the detection of the optical signal. For example, the at least one photodetector 220 may be made as a solid-state semiconductor photodetector, for example as a photodiode. For example, the at least one photodetector 220 may be made of silicon or other semiconductors, or other materials such as solution-processable ones.

The electric detection signals generated by the at least one photodetector 220 may be analog.

In particular, the electric detection signals generated by the at least one photodetector 220 may be analog current detection signals.

The at least one photodetector 220 may be directly or indirectly connected to an analog signal converter circuit 222 converting the analog current detection signals into analog voltage detection signals. The output of this analog signal converter circuit 222 may be connected to an analog-to-digital (ADC) converter 221 configured to convert the analog electric detection signals into digital electric detection signals.

More in general, the presence of the analog signal converter circuit 222 and of the ADC converter 221 are not related to each other.

Indeed, in some embodiments the analog signal converter circuit 222 is not present and the at least one photodetector 220 may be directly or indirectly connected to the ADC converter 221. In other embodiments, the analog signal converter circuit 222 is present and the ADC converter 221 is not present. In other embodiments both the analog signal converter circuit 222 and the ADC converter 221 are not present.

Moreover, the analog signal converter circuit 222, if present, and the ADC converter can be embedded into the at least one photodetector 220 or they can be external with respect to the at least one photodetector 220 to which it is associated. If the eventually present analog signal converter circuit 222 and the eventually present ADC converter 221 are embedded into the at least one photodetector 220, the electric detection signals generated by the at least one photodetector 220 are digital.

Preferably, the at least one photodetector 220 can be mechanically coupled to the edge of the at least one lens 114, 115 or to the inner edge of the front 111 of the frame 110 facing the edge of the at least one lens 114, 115.

In any case, according to the present invention, the at least one lens 114, 115 acts as an optical waveguide guiding towards the edges a fraction of the light impinging on the lens after being reflected by the eye illuminated by the at least one optical source 210, 211. Therefore, the at least one photodetector 220 is configured to detect the optical signal reflected by the eye (to be tracked) towards the lens and guided within the lens.

Advantageously, the at least one lens 114, 115 comprises at least one surface lattice resonance (SLR) based optical metasurface 120 configured to increase the light guiding effect towards the edge of the at least one lens 114, 115 at the predetermined wavelength range. Given the predetermined wavelength range as a design requirement, the SLR based optical metasurface 120 is configured to present a surface lattice resonance with a band corresponding to the predetermined wavelength range.

In the present description the term optical metasurface indicates a structure having a surface with nanostructures arranged to control the propagation of light incident on that surface. The nanostructures arranged on the surface of the structure are also called meta-atoms.

In the present description the term nanostructure indicates a structure having dimensions lower than 1 µm. The at least one SLR-based optical metasurface 120 is used to collect and direct the optical signal reflected by the eye and impinging on the at least one lens 114, 115. In particular, the use of at least one SLR-based optical metasurface 120 allows to select specific light wavelengths, that are the wavelengths comprised in the predetermined wavelength range, at particular incident angles and to control the direction of light propagation within the lens in a desired way. The at least one SLR-based optical metasurface 120, indeed, is capable of directing light at wavelengths comprised in the predetermined wavelength range towards the infrared photodetectors 220.

The eye-tracking system 200 comprises also a processing and control unit 230 associated to the at least one photodetector 220. In particular, the processing and control unit 230 is configured to receive the electric detection signals and to estimate the direction of the gaze of the eye to be tracked on the basis of the received electric detection signals.

In case the eye-tracking system 200 comprises also the at least one optical source 210, 211 the processing and control unit 230 is associated also to the at least one optical source 210, 211 and is configured to activate the at least one infrared radiation source 210, 211 so as to emit the optical signal.

For example, the processing and control unit 230 is a microcontroller but more in general it can be made of either analog or digital circuits.

If the processing and control unit 230 is made of analog circuits the ADC converter 221 is not present and the processing and control unit 230 receives analog electric detection signals, whereas if the processing and control unit 230 is made of digital circuits the ADC converter 221 must be present, embedded or external with respect to the at least one photodetector 220, and the processing and control unit 230 receives digital electric detection signals. Therefore, the electric detection signals received by the processing and control unit 230 may be analog or digital signals obtained as previously described. Therefore, by saying that the processing and control unit 230 is associated to the at least one photodetector 220 it is intended to mean that the processing and control unit 230 may be directly or indirectly connected to the at least one photodetector 220 depending on the eventually presence of the analog signal converter circuit 222 and of the ADC converted 221.

The processing and control unit 230, in particular, can comprise an internal memory (not illustrated) wherein a computer program is loaded; such a computer program implements an algorithm to estimate the direction of the gaze of the eye to be tracked on the basis of the received electric detection signals.

For example, such an algorithm can be a supervised machine learning algorithm that can be represented by an artificial neural network (ANN) comprising a plurality of nodes, called artificial neurons, interconnected to each other by means of branches, called artificial synapses. The ANN will be not described since it is known in the state of the art.

The algorithm implemented in the computer program loaded in the internal memory of the processing and control unit 230 is, preferably, trained by means of a dataset of maps of light signals of suitable size. The dataset can be composed of both simulated and experimental data generated with a known direction of gaze. The latter can be automatically acquired, for instance, by means of an artificial eye with a similar response in the infrared spectrum to the human eye. The artificial eye can be mounted on a motor-actuated stage whose position may be scanned through a dense grid of points identified by a couple of angles, in particular elevation and azimuth angles, defining the direction of gaze. The training allows to determine the weights of the ANN that are stored in the internal memory in order to run the eye tracking estimation in real time, with typical temporal resolution down to millisecond range.

Therefore, the training process of the algorithm implemented by the computer program stored in the internal memory of the processing and control unit 230 comprises the following steps:
- performing the experimental dataset acquisition step which provides the steps:
   - providing a head-mountable device 100 equipped with the eye-tracking system 200;
   - providing an artificial eye mounted on a support so as to be rotatable around two rotational axes according to a plurality of poses defined by a respective elevation angle or a pitch angle and a respective azimuth angle or yaw angle;
   - arranging the head-mountable device 100 in front of the artificial eye;
   - scanning a dense grid of points in the space of angles, i.e. couples of elevation and azimuth angles in the range of angles to be estimated by the eye-tracker system 200 and for each point acquiring the electric detection signals from the at least one photodetector 220;
- training the algorithm by using a fraction of the acquired experimental dataset, i.e. finding the optimal values of its hyperparameters, and by using another fraction of the acquired experimental dataset for validation.

Once the training process has ended, the optimal validated parameters, for example the weights of the ANN, are loaded in the computer program.

Preferably, the at least one SLR-based optical metasurface 120 is encapsulated in the at least one lens 114, 115. In case it is substantially transparent at the visible light wavelengths the at least one SLR-based optical metasurface 120 results to be not visible in the at least one lens 114, 115 that appears to be a common lens.

Preferably, the at least one SLR-based optical metasurface 120 comprises a dielectric substrate 121 on which a plurality of meta-atoms 122 is arranged according to a bidimensional periodic pattern.

For example, the dielectric substrate may be made of silicon dioxide.

Preferably, the meta-atoms 122 are arranged so as to realize a square lattice.

Alternatively, the meta-atoms 122 are arranged so as to realize a hexagonal lattice.

The geometrical arrangement of the meta-atoms can define different scattering directions, e.g. on a square lattice, they will follow the lattice vectors (1,0) and (0,1) or on a hexagonal lattice they will follow the (1,0), (0,1) and the (-1,1).

Preferably, the meta-atoms 122 are realized in form of cylindrical pillars or discs.

Preferably, the meta-atoms 122 are made of a dielectric material having a different refraction index with respect to the dielectric substrate.

For example, the meta-atoms 122 may be made of silicon (Si), gallium phosphite (GaP), silicon carbide (SiC) or titanium dioxide (TiO2).

Alternatively, the meta-atoms 122 are made of metal, for example gold, silver or aluminum.

The diameter of the meta-atoms determines the spectral position of the so-called Mie resonance whereas the period of the bidimensional periodic pattern determines the spectral position of the so-called Rayleigh anomaly. The coupling between the Mie resonance and the Rayleigh anomaly generates the surface lattice resonance.

Thus, the spectral position of the SLR depends on both the position of the Mie-type resonance and the RA. So both the diameter and the period influence the spectral position of the SLR.

Once the predetermined wavelength range has been chosen, an operational wavelength included in such a predetermined wavelength range is also chosen. The spectral position of the SLR, thus, should correspond to the operational wavelength. The spectral position of the SLR determines the design of the metasurface (diameter and period must be chosen so that the Mie resonance and the RA give rise to an SLR centered on the operational wavelength).

Preferably, the meta-atoms 122 have a diameter ranging from 30 nm to 200 nm and the period of the bidimensional periodic pattern ranges from 400 nm to 1000 nm depending on the substrate refractive index.

For example, considering (i) a substrate with real refractive index n = 1.45 and (ii) an application requiring near-infrared light scattering, the meta-atoms have a diameter ranging from 50 to 150 nm and the period of the bidimensional periodic pattern is set in the range between 500 and 700 nm.

An optimization algorithm implemented by a software can be performed to fine tune the final geometry of the single meta-atom to match the RAs and maximize the resonance related to the in-plane scattering.

In order to tune the frequency of the SLRs towards a particular spectral range (infrared or near infrared in this case), it is sufficient to act on the dimension of the meta-atoms (such as shape, size, and height) or on the RAs condition defined by $\vec{{k}_{/ / d}} = \vec{{k}_{/ /}} + \vec{{G}_{x}} + \vec{{G}_{y}}$ where *̅k̅*̅_̅{̅/̅/̅*̅d̅*̅}̅ is the wave vector for the in-plane diffracted orders, *̅k̅*̅_̅{̅/̅/̅}̅ is the in-plane projection of the incident wave vector, and Gx and Gy are the reciprocal lattice vectors of the array.

The at least one SLR-based optical metasurface 120 performs better if the meta-atoms are embedded in a homogeneous environment since this condition maximizes the radiative in-plane coupling between particles due to phase matching of the in-plane diffraction orders in the lower and upper media. The homogeneous environment is an important requirement to excite efficiently the SLR mode when the system is illuminated at normal incidence but is not fundamental in other situations.

Therefore, preferably, the at least one SLR-based optical metasurface 120 comprises a superstrate 123 arranged on the substrate 121 encapsulating the meta-atoms 122.

More preferably, the superstrate may be made of the same dielectric material of the substrate 121. Alternatively, the superstrate may be made of a dielectric material with a refractive index very close to the refractive index of the dielectric material of the substrate 121; in particular, the difference between the refractive index of the two dielectric materials may range between ± 0.1.

In SLR-based optical metasurfaces, the meta-atoms function solely as resonators, regardless of the physical phenomenon responsible for their resonance. The key factor is the resulting near-field (NF) generated by each resonator, which then interacts collectively across the metasurface to produce the SLR. Whether the resonators are metallic, supporting plasmonic resonances with confined electric fields, or dielectric, exhibiting different resonant phenomena, the critical aspect is their role as resonators. The specific nature of the resonance - be it plasmonic or dielectric - is secondary to the collective interaction that gives rise to the SLR.

In the case of plasmonic resonators, that is the case of metallic meta-atoms, the electromagnetic field is confined within a structure of very small dimensions, preventing extensive propagation through space. As a result, the absorption phenomena are localized, which minimizes the dissipation of energy and mitigates significant losses typically observed in plasmonic effects.

The eye-tracking system 200 comprises also a battery 240 associated to the processing and control unit 230, the at least one photodetector 220 and to the at least one optical source 210, 211, if present, so as to electrically supply them.

The eye-tracking system 200 may also comprise a wireless communication module 250 associated to the processing and control unit 230 configured to communicate in a wireless manner with an electronic terminal, such as a smartphone.

The performance of the estimation of the gaze direction and other eye parameters, like blink or pupil diameter depends on the number of the photodetectors and their position. The optimal position is obtained through numerical simulation. In particular, it is possible to change the number and the position of the at least one infrared radiation source 210, 211 and of the at least one photodetector 220 by means of optical simulations in order to maximize the amount of light collected by the photodetectors 220 and the spatial resolution, i.e. the sensitivity of the collected light maps to the direction of gaze.

The number of photodetectors 220 determines not only the angular resolution of the calculation of the gaze direction but also the value of the power consumption and dissipation. In particular, the largest is the number of photodetectors 220 the largest is such an angular resolution but at the same time the largest is the value of the power consumption and dissipation.

However, it is necessary to establish a number of photodetectors which represents a compromise between the need of sufficiently high angular resolution and sufficiently low power consumption and dissipation. Preferably the photodetectors 220 are at least three. More preferably the photodetectors 220 are four.

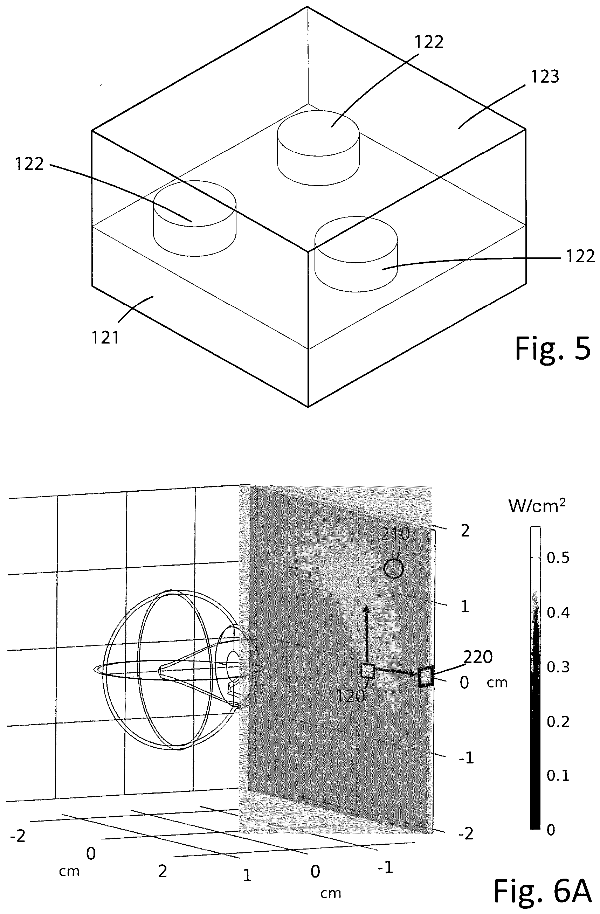

Figure 5a shows an example of a ray-tracing simulation setup used for the validation of the results obtained by the described eye-tracking system. Such simulation setup provides a flat lens with one infrared source, a LED operating at 850 nm and having a power of 1 mW, and one infrared photodetector (PD) coupled to the edge of the lens and one SLR-based optical metasurface of 4 mm² integrated in the lens.

The simulation is performed in the scenario in which the SLR-based optical metasurface is provided and in the scenario in which no SLR-based optical metasurface is provided.

The signal increment for different scattering efficiencies is estimated wherein the scattering efficiency is the fraction of light that the SLR-based optical metasurface, coupled with the lens, can effectively convey towards the photodetector.

This value is computed as the fraction of power scattered by the SLR-based optical metasurface within the cone of light which cannot radiate outside the lens due to total internal reflection.

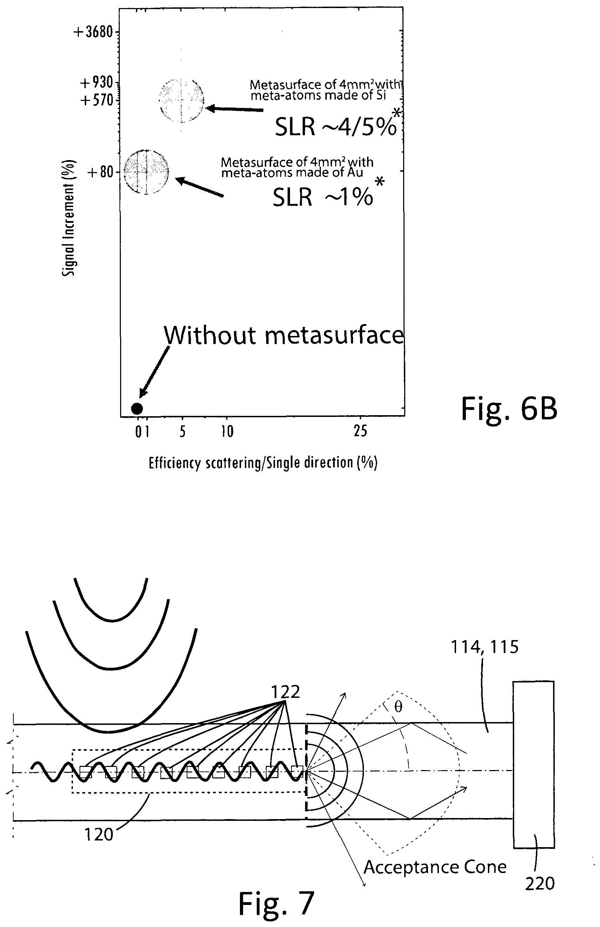

Indeed, in the proximity of the end of the SLR-based optical metasurface the optical signal is scattered in several directions as a beam. The fraction of this beam that is subject to the total internal reflection arrives to the photodetector. With reference to figure 7, considering n₂ as the refraction index of the lens, n₁ as the refraction index of the air, and a critical angle for the total internal reflection ϕ_{TIR}=arcsin (n₂/n₁), the fraction of beam that arrives to the photodetector is the one contained in an acceptance cone with semi-opening θ= 90° - ϕ_{TIR}. The intensity scattered inside the acceptance cone is then integrated on the solid angle subtended by the cone itself to evaluate the effective optical efficiency of the system, that is, the fraction of the signal incident on the SLR-based metasurface that is actually collected by the photodetector.

Depending on any coating or use of different materials for the lens, the critical angle can change, changing the size of the integration cone and therefore the efficiency.

The data employed in the above calculation is produced by far-field propagation of the fields evaluated via FDTD (Finite Difference Time Domain) simulation of the structure.

The signal increment represents the increasing of power accumulated at photodetector with the SLR-based optical metasurface in the lens compared to the case without SLR-based optical metasurface in the lens and may be calculated as $\left(\frac{{I}_{withmetasurface}}{{I}_{without metasurface}}-1\right) ⋅ 100$.

From figure 6b it can be observed that considering a first case with the SLR-based metasurface with meta-atoms made of gold (Au) and a second case with the SLR-based metasurface with meta-atoms made of silicon pillars, the signal increment in both cases is much higher with respect to the case without the SLR-based metasurface.

In particular, in the second case, the signal increment is higher with respect to the first case.

The signal efficiency can be further enhanced by optimizing the scattering capability of the SLR-based optical metasurface.

The process for fabricating the SLR-based optical metasurface 120 will be described in the following. Such a process comprises the steps:
- providing a dielectric substrate 310 and depositing a layer of electronic resist 320 on a top surface of the dielectric substrate 310 wherein the electronic resist layer 320 is sensitive to an electronic beam and is capable of modifying its molecular structure depending on where it is exposed to the electronic beam and with which intensity;
- depositing an electrically conductive layer 330 on the electronic resist layer 320; the electrically conductive layer 330 does not disturb the lithographic exposure, but has the purpose of discharging the accumulation of charge due to the presence of insulating materials, such as the substrate 310 and the electronic resist layer 320;
- impressing the desired geometry of the meta-atoms lattice on the electronic resist layer 320 through electronic lithography, that is, by directing a beam of electrons, appropriately collimated, into the areas of interest;
- removing the electrically conductive layer 330;
- performing a chemical attack on the impressed electronic resist layer 320 obtaining the negative of the final geometry; in this way the electronic resist layer 320 protects the areas of the substrate 310 on which the material of the meta-atoms is not to be deposited, leaving uncovered the areas where, instead, the material of the meta-atoms is to be deposited;
- depositing the material of the meta-atoms, for example gold, on the uncovered areas of the substrate 310;
- removing the electronic resist layer 320 obtaining the final arrangement of the meta-atoms above the substrate. For example, the electronic resist layer 320 is PMMA and the deposition of the layer of electronic resist 320 may be made through spin coating technique.

For example, the deposition of the electrically conductive layer may be made through spinning or deep-coating techniques.

For example, the deposition of the material of the meta-atoms may be made through several different techniques, such as physical evaporations (e-beam, thermal or sputtering) or chemical vapor depositions.

The removal of the electronic resist layer 320 may be made through a solvent bath and a following exposure to ultrasound, in other words through a process called lift-off.

Preferably the processing and control unit 230 and the battery 240 are mounted in two different parts of the head-mountable device. However, they can be also mounted inside the same part of the head-mountable device.

In any case the interconnections between the at least one photodetector 220, the at least one source 210, if present, the processing and control unit 230 and the battery may be achieved by means of wires or flexible printed circuit boards PCBs.

In a particular embodiment the battery 240 comprises a system of photovoltaic cells adapted to recharge the battery 240.

Preferably, the at least one photodetector 220 have a transversal size comprised between 1 and 3 mm so that they can be applied to the edge of the at least one lens 214, 215 without protruding beyond their thickness. In this way no visible alteration is introduced in the shape of the frame 210 and of the at least one lens 214, 215. The aesthetics of the eyewear 100 is unaltered by the introduction of the eye-tracking system 200.

The eye-tracking system 200 is compatible with any class of lens in terms of material, color, ophthalmic correction etc.

Preferably, the at least one photodetector 220 is applied to the edge of the at least one lens 214, 215 by means of an optical glue, that is a glue that allows to obtain a high optical coupling between the edge of the at least one lens 214, 215 surface and the at least one photodetector 220 which is critical for the functioning of the eye-tracking system 200.

From the description made, the characteristics of the head mountable device, object of the present invention, are clear, as are the relative advantages.

Indeed, such a head mountable device is provided with an eye-tracking system that does not need to modify the shape of the frame of a common eyewear, since the photodetectors are optically coupled to the edges of the lenses without protruding beyond their thickness. Moreover, the use of the SLR-based metasurfaces in the lens offer significant advantages over traditional grating which can couple light within the lens. Indeed it allows an accurate control of the direction of light propagation within the lens maintaining good level of transparency, and increases the amount of light energy that reaches the photodetectors at the edge of the lens with respect to the case without metasurface. This results in a more accurate eye-tracking estimate. Moreover the use of the SLR-based metasurfaces allows to obtain several different scattering directions for respective specific light frequency components.

The tuning of the geometry and the arrangement of the meta-atoms provide the possibility to adapt the resonance energy at different working angles and to control the direction of in plane scattering.

Moreover, since SLR resonances rise from the interaction of single meta-atoms and the RAs, this metasurface functionality should be tolerant to wide degrees of incidence. Indeed, meta-atoms usually show very broad resonances and the RA drifts only few tens of nm from 0 to 15°.

Finally, concerning the fabrication feasibility, the design geometry is a classical periodic structure which is fully achievable with large scale fabrication techniques as nanoimprint lithography or displacement Talbot lithography.

The use of such metasurfaces on the "on-edge" architecture will improve not only the quantity of light scattered on the edges of the lens but will also improve the quality of the signal over the scattering noise deriving from the environment.

Finally, it is clear that the head mountable device thus conceived is susceptible of numerous modifications and variations, all of which are within the scope of the invention; moreover, all the details may be replaced by technically equivalent elements. In practice, the materials used, as well as their dimensions, can be of any type according to the technical requirements.

## Claims

1. Head-mountable device (100) comprising:
- at least one lens (114, 115);
- an eye-tracking system (200) associated to the at least one lens (114, 115), said eye-tracking system (200) comprising:
- at least one photodetector (220) optically coupled to the edge of the at least one lens (114, 115), said at least one photodetector (220) being configured to detect the optical signal reflected by the eye to be tracked and generate a respective electric detection signal;
- a processing and control unit (230) associated to the at least one photodetector (220), said processing and control unit (230) being configured to receive the electric detection signals and to estimate the direction of the gaze of the eye to be tracked on the basis of said received electric detection signals;
wherein the at least one lens (114, 115) comprises at least one SLR-based optical metasurface (120) configured to increase the light guiding effect towards the edge of the at least one lens (114, 115) at a predetermined wavelength range.

2. Head-mountable device (100) according to claim 1 wherein the predetermined wavelength range is the infrared wavelength range or the near infrared wavelength range.

3. Head-mountable device (100) according to claim 1 or 2 wherein the eye-tracking system (200) comprises also at least one optical source (210, 211) arranged to face and emit infrared radiation towards a respective eye to be tracked of a user when such a user wears the head-mountable device (100), the processing and control unit (230) being associated also to the at least one optical source (210, 211) and being configured to activate the at least one optical source (210, 211) so as to emit the optical signal.

4. Head-mountable device (100) according to one or more of the preceding claims wherein the at least one SLR-based optical metasurface (120) is configured to be substantially transparent at the visible light wavelengths.

5. Head-mountable device (100) according to one or more of the preceding claims comprising a frame (110) to which the at least one lens (114, 115) is coupled, the at least one photodetector (220) being mechanically coupled to the edge of the at least one lens (114, 115) or to the inner edge of the frame (110) facing the edge of the at least one lens (114, 115).

6. Head-mountable device (100) according to one or more of the preceding claims wherein the at least one SLR-based optical metasurface (120) is encapsulated in the at least one lens (114, 115).

7. Head-mountable device (100) according to one or more of the preceding claims wherein the at least one SLR-based optical metasurface (120) comprises a dielectric substrate (121) on which a plurality of meta-atoms (122) is arranged according to a bidimensional periodic pattern.

8. Head-mountable device (100) according to claim 7 wherein the meta-atoms (122) are realized in form of cylindrical pillars.

9. Head-mountable device (100) according to claim 7 or 7 wherein the meta-atoms (122) are made of metal.

10. Head-mountable device (100) according to one or more of claims from 7 to 9 wherein the meta-atoms (122) are arranged so as to realize a square lattice.

11. Head-mountable device (100) according to one or more of claims from 7 to 9 wherein the meta-atoms are arranged so as to realize a hexagonal lattice.

12. Head-mountable device (100) according to claim 10 or 11 wherein the meta-atoms (122) have a diameter ranging from 30 nm to 200 nm and the lattice period ranges from 400 nm to 1000 nm depending on the substrate refractive index.

13. Head-mountable device (100) according to one or more of claims from 7 to 12 wherein the at least one SLR-based optical metasurface (120) comprises a superstrate (123) arranged on the substrate (121) encapsulating the meta-atoms (122).
